# EUROPÄISCHE PATENTANMELDUNG

(11) **EP 2 515 410 A1**
(43) Veröffentlichungstag der Anmeldung: **24.10.2012**
(21) Anmeldenummer: 11162865.7
(22) Anmeldetag: 18.04.2011
(51) Int. Cl.: H02J 5/00, H01F 38/14, H02J 7/02

(54) **Anordnung, Vorrichtung und Verfahren zur induktiven Energieübertragung**

(71) Anmelder: RRC power solutions GmbH, 66424 Homburg/Saar (DE)
(72) Erfinder: Huwig, Dominik, 66839, Schmelz (DE)
(74) Vertreter: Hofstetter, Schurack & Partner

(57) **Zusammenfassung**

Die vorliegende Erfindung betrifft eine Anordnung zur induktiven Energieübertragung mit einer ersten Spule; einer zweiten Spule; und einer dritten Spule, wobei die Anordnung weiterhin eine Fixiervorrichtung (30) umfasst, die ausgelegt ist, die erste (16), die zweite (10) und die dritte Spule (20) zum Zwecke der Energieübertragung in konzentrischer Ausrichtung zueinander zu fixieren. Sie betrifft überdies eine entsprechende Vorrichtung zur induktiven Energieübertragung sowie ein entsprechendes Verfahren.

## Beschreibung

Die vorliegende Erfindung betrifft eine Anordnung zur induktiven Energieübertragung mit einer ersten Spule, einer zweiten Spule und einer dritten Spule. Sie betrifft überdies eine Vorrichtung zur induktiven Energieübertragung mit einer ersten Spule und einer zweiten Spule sowie ein Verfahren zur induktiven Energieübertragung mittels einer Anordnung mit einer ersten Spule, einer zweiten Spule und einer dritten Spule.

Die vorliegende Erfindung betrifft die kabellose Übertragung von Energie. Dazu ausgelegte Vorrichtungen werden mittlerweile in den unterschiedlichsten Gebieten eingesetzt, beispielsweise zur Versorgung und/oder zum Laden von elektronischen Geräten, wie Handys oder MP3-Player, die in Textilien eingebaut sind, zur Versorgung und/oder zum Laden von Implantaten, als Ladevorrichtung für Geräte, die nur ein geringes Gewicht haben dürfen, sowie bei kostengünstigen mobilen Spulensystemen, welche mit stationären Spulen gekoppelt werden sollen.

Wenngleich die vorliegende Erfindung im Nachfolgenden am Beispiel eines Kommunikations- und/oder Entertainmentsystems, das in einer Textilie angeordnet ist, näher erläutert werden wird, lässt sich diese, wie bereits erwähnt, in den unterschiedlichsten anderen Gebieten einsetzen. Die im Nachfolgenden an diesem Beispiel gemachten Ausführungen dienen daher lediglich der besseren Verständlichkeit und sollen nicht einschränkend verstanden werden.

Demnach benötigen in flexiblen Umhausungen, beispielsweise Textilien, angeordnete elektrische Baugruppen eine elektrische Versorgung, welche oft durch wiederaufladbare Batterien realisiert wird. Zur Ladung dieser kann auf einen elektrischen Steckverbinder und die damit einhergehenden Nachteile verzichtet werden, wenn die Batterie über eine induktive Kopplung geladen wird.

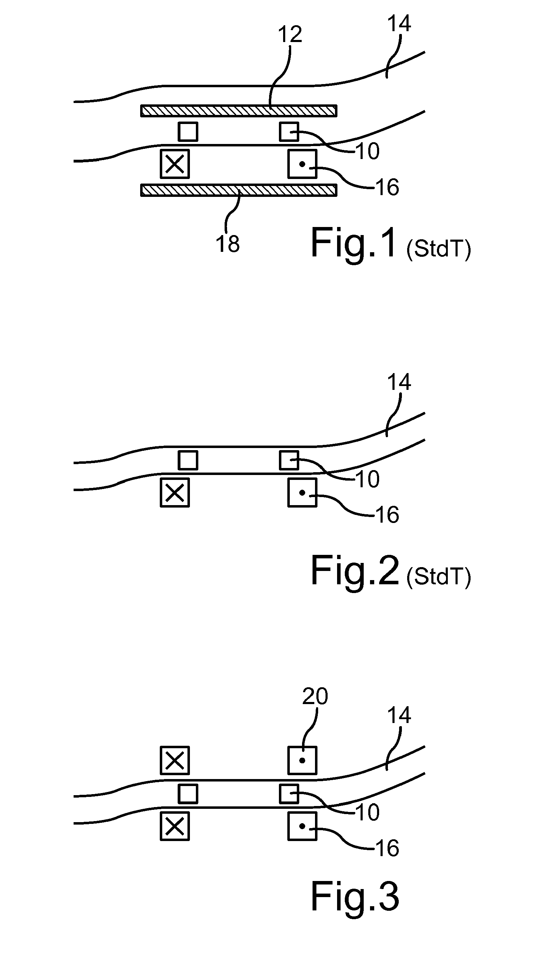

In diesem Zusammenhang zeigt Fig. 1 eine bekannte Anordnung zur induktiven Energieübertragung. Diese umfasst vorliegende eine Empfängerspule 10, die zusammen mit einer Schirmvorrichtung 12 in einer Textilie 14 angeordnet ist. Außerhalb der Textilie 14 ist konzentrisch zur Empfängerspule 10 eine Sendespule 16 angeordnet, wobei auf der von der Empfängerspule 10 abgewandten Seite der Sendespule 16 ebenfalls eine Schirmvorrichtung 18 vorgesehen ist. Die Schirmvorrichtungen 12 und 18 sind nötig, um den Einfluss des bei der Energieübertragung entstehenden magnetischen Feldes auf die Umgebung zu reduzieren beziehungsweise zu verhindern. Durch das magnetische Feld wird nämlich in fremden elektrisch leitfähigen Gegenständen ein Wirbelstrom induziert, der zu unerwünschter Wärmeentwicklung führen kann. Auch eine Exposition von organischem Gewebe kann durch den Einsatz von Schirmen, gegebenenfalls zur Einhaltung vorhandener Richtlinien, verringert werden.

Zur Schirmung werden aus Kostengründen häufig starre Ferrite und Metallabschirmungen, jedoch auch ferromagnetische Polymere verwendet. Diese senken, bedingt durch ihr zusätzliches Gewicht und ihre weitgehend fehlende mechanische Flexibilität, den Tragekomfort.

Fig. 2 zeigt in diesem Zusammenhang eine bekannte Anordnung, wie sie beispielsweise bei geringeren Leistungen und/oder höherer erlaubter Feldemission eingesetzt werden kann. Durch den Verzicht auf die Schirmvorrichtungen steigt der Komfort. Der Verzicht hat aber im Allgemeinen eine Verringerung des magnetischen Kopplungsfaktors zur Folge, welcher wiederum maßgeblich für den Wirkungsgrad der Energieübertragung ist.

Aus der JP 002010119456 A ist eine Anordnung bekannt, um ein gekapseltes und in einer Magenflüssigkeit einer Person schwimmendes Endoskop mit Leistung zu versorgen. Dabei erfolgt die Versorgung durch induktive Kopplung. Die Kapsel ist so aufgebaut, dass sie auf der Magenflüssigkeit schwimmt. Ein Gewicht sorgt dafür, dass sich eine Kamera des Endoskops immer außerhalb der Magenflüssigkeit befindet. Dies hat zur Folge, dass die Position der Empfängerspule von der Körperhaltung des Patienten abhängig ist (Flüssigkeit und Gravitation) und sich demnach in der Ausrichtung stark verändern kann (stehende/liegende Position des Patienten).

Dies macht es nötig, dass hier entweder die Empfängerspule an das äußere Feld adaptiert oder dass das Sendefeld, das heißt das äußere Feld, in Abhängigkeit der Körperhaltung angepasst wird. Ein Gravitationssensor misst die Position der Person und schaltet entsprechende Sendespulen außerhalb des Körpers zu oder ab. Eine Helmholtz-Spulen-Anordnung sorgt dafür, dass das Feld im Inneren des Patienten homogen ist und dadurch der Feldverlauf von Außen vorhersehbar oder abschätzbar ist.

Eine weitere Vorrichtung zur induktiven Energieübertragung ist aus der US 2010/0127660 A1 bekannt.

Die Aufgabe der vorliegenden Erfindung besteht deshalb darin, eine eingangs genannte Anordnung, eine eingangs genannte Vorrichtung sowie ein eingangs genanntes Verfahren derart weiterzubilden, dass eine induktive Energieübertragung bei erhöhter mechanischer Flexibilität, reduziertem Gewicht sowie erhöhtem Wirkungsgrad ermöglicht wird.

Diese Aufgabe wird gelöst durch eine Anordnung mit den Merkmalen von Patentanspruch 1, eine Vorrichtung mit den Merkmalen von Patentanspruch 11, eine Vorrichtung mit den Merkmalen von Patentanspruch 12 sowie ein Verfahren mit den Merkmalen von Patentanspruch 15.

Einem ersten Aspekt der vorliegenden Erfindung liegt die Erkenntnis zugrunde, dass die obige Aufgabe gelöst werden kann, wenn es gelingt, die erste, die zweite und die dritte Spule zum Zwecke der Energieübertragung in konzentrischer Ausrichtung zueinander zu fixieren. Erst durch die Fixierung in konzentrischer Ausrichtung ist nämlich eine optimale Energieübertragung ermöglicht. Der Kopplungsfaktor ist dabei sehr groß und dies schlägt sich in einem hohen Wirkungsgrad wieder. Demgemäß umfasst eine erfindungsgemäße Anordnung weiterhin eine Fixiervorrichtung, die ausgelegt ist, die erste, die zweite und die dritte Spule zum Zwecke der Energieübertragung konzentrischer zueinander zu fixieren.

Durch die erfindungsgemäße Vorgehensweise wird grundsätzlich die Möglichkeit bereitgestellt, die äußeren beiden Spulen, das heißt die erste und die dritte Spule, derart einzusetzen, dass es zu einer Feldbündelung kommt, welche zu einer Steigerung des Kopplungsfaktors zwischen den Senderspulen und der Empfängerspule führt. Eine besonders bevorzugte Ausführungsform zeichnet sich demnach dadurch aus, dass die Anordnung eine Stromversorgungsvorrichtung umfasst, die derart mit der ersten und der dritten Spule gekoppelt ist, dass die erste Spule und die dritte Spule zumindest während der induktiven Energieübertragung von Strom durchflossen werden, wobei die zweite Spule räumlich zwischen der ersten und der dritten Spule angeordnet ist. Ein Bündelungseffekt ergibt sich dabei nur dann nicht, wenn die Ströme in der ersten und der dritten Spule bei gleicher Frequenz genau gegenphasig mit gleicher Amplitude sind. Der Bündelungseffekt ist hingegen maximal, wenn beide Ströme gleichen Betrag und gleiche Phase haben. Bevorzugt sind daher die erste und die dritte Spule derart mit einer Stromversorgungsvorrichtung gekoppelt, dass sie zumindest während der induktiven Energieübertragung im Wesentlichen gleichphasig von Strom, insbesondere demselben Strom, durchflossen werden.

Durch die dadurch erzielte Feldbündelung der Felder der Sendespulen und damit einhergehenden Steigerung des Kopplungsfaktors kann auch ohne Verwendung von Schirmvorrichtungen ein Wirkungsgrad erzielt werden, wie er im Stand der Technik erst unter Verwendung von Schirmvorrichtungen ermöglicht wird. Durch das Weglassen der Schirmvorrichtungen ergibt sich ein geringeres Gewicht sowie eine erhöhte mechanische Flexibilität einer erfindungsgemäßen Anordnung.

Die Anordnung kann jedoch auch eine Stromversorgung umfassen, die mit der zweiten Spule gekoppelt ist, wobei die zweite Spule räumlich zwischen der ersten und der dritten Spule angeordnet ist. Bei dieser Anordnung stellt die zweite Spule die Sendespule dar, während die erste und die dritte Spule die Empfängerspulen bilden. Auch bei einer derartigen Anordnung kommt es zu einer Feldbündelung und damit zu einem Synergieeffekt, da während der Energieübertragung sowohl in den Empfangsspulen als auch in der Sendespule ein Strom fließt.

Selbst wenn Schirmvorrichtungen bei der vorliegenden Erfindung verzichtbar sind, kann dennoch zur weiteren Erhöhung des Kopplungsfaktors der beteiligten Spulen vorgesehen werden, dass eine erfindungsgemäße Anordnung weiterhin eine erste und eine zweite ferromagnetische Schirmvorrichtung umfasst, wobei die erste Schirmvorrichtung auf der Seite der ersten Spule angeordnet ist, die von der zweiten Spule abgewandt ist, wobei die zweite Schirmvorrichtung auf der Seite der dritten Spule angeordnet ist, die von der zweiten Spule abgewandt ist. Durch diese Maßnahme lässt sich der Feldaustritt weiter verringern, was zu einer Steigerung des Kopplungsfaktors und damit zu einer weiteren Erhöhung des Wirkungsgrads führt. Im Gegensatz zum Stand der Technik, vergleiche Fig. 1, bei dem eine Schirmvorrichtung in der Textilie 14 angeordnet werden musste, ist es bei der vorliegenden Erfindung möglich, die Schirmvorrichtung außerhalb der Textilie anzuordnen, so dass sich selbst bei dieser bevorzugten Ausführungsform, bei der Schirmvorrichtungen verwendet werden, keine Beeinträchtigung der Flexibilität sowie keine Erhöhung des Gewichts für den Träger der mittleren Spule ergibt. Bevorzugt ist deshalb die Kombination aus erster Spule und erster Schirmvorrichtung in einer ersten Einheit zusammengefasst und die Kombination aus zweiter Schirmvorrichtung und dritter Spule in einer zweiten Einheit. Auf diese Weise kann die erste Einheit auf der einen Seite der Textilie, in der die zweite Spule angeordnet ist, und die zweite Einheit auf der anderen Seite dazu angeordnet werden, um eine induktive Energieübertragung mit hohem Wirkungsgrad durchzuführen. Die erste und/oder die zweite Schirmvorrichtung kann Ferrit, Metall oder mindestens ein ferromagnetisches Polymer umfassen.

Besonders bevorzugt ist die zweite Spule als Luftwicklung realisiert, wodurch eine besonders hohe Flexibilität erzielt werden kann. Alternativ kann die zweite Spule einen ferromagnetischen Kern, insbesondere eine ferromagnetische Scheibe umfassen. Dadurch wird zwar die Flexibilität geringfügig verringert und das Gewicht steigt minimal an, jedoch kann hierdurch eine weitere Steigerung des Kopplungsfaktors und damit eine weitere Erhöhung des Wirkungsgrads erzielt werden.

Anstelle einer zweiten Spule können auch mehrere zweite Spulen vorgesehen sein, die zueinander konzentrisch ausgerichtet sind. Dadurch können mittels eines einzigen E-nergieübertragungsvorgangs eine Vielzahl von Geräten, denen jeweils mindestens eine zweite Spule zugeordnet ist, mit Energie versorgt werden. Letzteres kann beispielsweise in der Medizin angewendet werden, wenn eine Versorgung eines Implantates nur durch einen Arzt möglich ist, jedoch eine große Anzahl von Patienten mit einer entsprechend großen Anzahl von mobilen Spulensystemen zu versorgen ist. Die vorliegende Erfindung ermöglicht, dass beispielsweise eine Schirmung nur in der stationären Einheit beim Arzt vorgesehen werden muss, was die Kosten des Gesamtsystems (eine stationäre Ladevorrichtungen für n mobile Systeme) stark reduziert. Weiterhin ergibt sich hier eine beträchtliche Zeitersparnis, da mehrere mobile Systeme gleichzeitig mit Energie versorgt werden können.

Zur Ausrichtung der Spulen zueinander kann mit der ersten Spule ein erster Magnet und/oder mit der dritten Spule ein zweiter Magnet gekoppelt sein, wobei mit der zweiten Spule ein magnetisches Element gekoppelt ist, das geeignet ist, mit dem ersten und/oder dem zweiten Magneten zur Ausrichtung der zweiten Spule gegenüber der ersten und/oder der dritten Spule zusammenzuwirken. Durch diese Maßnahme ist eine optimale Ausrichtung der beteiligten Spulen zueinander sichergestellt, so dass mit einer gegebenen Anordnung immer der für diese Anordnung maximale Kopplungsfaktor und daher maximale Wirkungsgrad erzielt wird.

Der erste und/oder der zweite Magnet kann einen Permanentmagneten oder einen Elektromagneten umfassen.

Die zweite Spule ist bevorzugt, wie erwähnt, in einem flexiblen Gewebe oder in einem Körper eines Lebewesens angeordnet. Die zweite Spule kann auch in einem Endabschnitt einer mobilen Vorrichtung angeordnet sein. Dies eröffnet die Möglichkeit, diesen Endabschnitt in einer stationären Ladestation einzuführen, in der die erste und die dritte Spule angeordnet sind.

Eine erfindungsgemäße Vorrichtung zur induktiven Energieübertragung zeichnet sich dadurch aus, dass gegenüber einer gattungsgemäßen Vorrichtung die Vorrichtung ein erstes Element umfasst, in dem die erste Spule angeordnet ist, sowie ein zweites Element, in dem die zweite Spule angeordnet ist. Das erste und das zweite Element sind zumindest während der induktiven Energieübertragung derart angeordnet, dass die erste und die zweite Spule konzentrisch ausgerichtet sind, wobei zwischen dem ersten und dem zweiten Element ein Raum für eine dritte Spule verbleibt, um Energie von der ersten und der zweiten Spule auf die dritte Spule zu übertragen. Der Raum für die dritte Spule ist dabei derart ausgelegt, dass die dritte Spule nach dem Eindringen in diesen Raum in einer Lage fixiert ist, bei der die dritte Spule konzentrisch mit der ersten und der zweiten Spule ausgerichtet ist. Die erste und die zweite Spule sind derart elektrisch miteinander gekoppelt, dass sie zumindest während der Energieübertragung gleichsinnig von demselben Strom durchflossen werden.

Ein erfindungsgemäßes Verfahren zur induktiven Energieübertragung mittels einer Anordnung mit einer ersten Spule, einer zweiten Spule und einer dritten Spule zeichnet sich dadurch aus, dass zunächst die erste, die zweite und die dritte Spule konzentrisch ausgerichtet werden, anschließend die erste, die zweite und die dritte Spule in der konzentrischen Ausrichtung fixiert werden und anschließend zumindest eine der Spulen bestromt wird.

Für die erfindungsgemäße Vorrichtung sowie das erfindungsgemäße Verfahren gelten die im Zusammenhang mit der erfindungsgemäßen Anordnung vorgestellten bevorzugten Ausführungsformen und deren Vorteile, soweit anwendbar, entsprechend.

Gemäß einem zweiten Aspekt der vorliegenden Erfindung betrifft diese auch eine Vorrichtung zur induktiven Energieübertragung mit einer ersten Spule, einer ersten Schirmvorrichtung, die der ersten Spule zugeordnet ist, und einer zweiten Schirmvorrichtung. Erfindungsgemäß ist überdies vorgesehen, dass die Vorrichtung ein erstes Element umfasst, in dem die erste Spule und die erste Schirmvorrichtung angeordnet ist, sowie ein zweites Element, in dem die zweite Schirmvorrichtung angeordnet ist. Das erste und das zweite Element sind zumindest während der induktiven Energieübertragung derart angeordnet, dass die erste und die zweite Schirmvorrichtung derart gegenüberliegend ausgerichtet sind, dass zwischen dem ersten und dem zweiten Element Raum für eine zweite Spule verbleibt, um Energie von der ersten auf die zweite Spule zu übertragen. Der Raum für die zweite Spule ist dabei derart ausgelegt, dass die zweite Spule nach dem Eindringen in diesen Raum in einer Lage fixiert ist, bei der die zweite Spule konzentrisch mit der ersten Spule ausgerichtet ist. Die erste Schirmvorrichtung ist auf der Seite der ersten Spule angeordnet, die von dem für die zweite Spule vorgesehenen Raum abgewandt ist.

Sowohl bei der erfindungsgemäßen Vorrichtung gemäß dem ersten Aspekt als auch bei der erfindungsgemäßen Vorrichtung gemäß dem zweiten Aspekt kann die Vorrichtung als Zange ausgebildet sein mit einem ersten Arbeitsbacken und einem mit diesem fest verbundenen ersten Zangengriff, sowie einem mittels einer Schwenkachse schwenkbar am ersten Backen gelagerten zweiten Arbeitsbacken, der mit dem ersten Arbeitsbacken ein Zangenmaul bildet, einem zweiten Zangengriff, der mit dem zweiten Arbeitsbacken fest verbunden ist, sowie einem Federelement, das ausgelegt ist, den ersten gegen den zweiten Arbeitsbacken federnd vorzuspannen, wobei das erste Element am ersten Arbeitsbacken und das zweite Element am zweiten Arbeitsbacken angeordnet ist, sowie einem Anschluss zum Anschließen der Vorrichtung an eine Spannungsversorgung, wobei der Anschluss zumindest mit der ersten Spule gekoppelt ist. Durch die Realisierung als Zange kann besonders einfach und zuverlässig eine induktive Energieübertragung bei einem maximalen Wirkungsgrad sichergestellt werden. Besonders bevorzugt ist dabei im ersten Element und im zweiten Element eine geometrische Form ausgebildet, die mit einer geometrischen Form, die an der zweiten/dritten Spule ausgebildet ist, zusammenwirkt. Beispielsweise kann im ersten und im zweiten Element eine Vertiefung vorgesehen sein, von der die zweite/dritte Spule bzw. eine Vorrichtung, in der die zweite/dritte Spule untergebracht ist, formschlüssig aufgenommen wird.

Alternativ kann vorgesehen sein, dass die Vorrichtung eine stationäre U-förmige Aufnahme umfasst, wobei in einem ersten Schenkel das erste Element und in einem zweiten Schenkel, der dem ersten Schenkel gegenüberliegt, das zweite Element angeordnet ist, sowie einen Anschluss zum Anschließen der Vorrichtung an eine Spannungsversorgung, wobei der Anschluss zumindest mit der ersten Spule gekoppelt ist. Auf diese Weise lässt sich eine insbesondere stationäre Docking Station realisieren, in die eine zweite Spule, die beispielsweise in einem Endabschnitt einer mobilen Vorrichtung angeordnet ist, zum Zwecke der induktiven Energieübertragung eingeführt werden kann.

Die mit Bezug auf die erfindungsgemäße Anordnung, die Vorrichtung gemäß dem ersten Aspekt sowie das erfindungsgemäße Verfahren vorgestellten bevorzugten Ausführungsformen und deren Vorteile gelten entsprechend, soweit anwendbar, für die Vorrichtung gemäß dem zweiten Aspekt.

Weitere bevorzugte Ausführungsformen ergeben sich aus den Unteransprüchen.

Im Nachfolgenden werden nunmehr Ausführungsbeispiele der vorliegenden Erfindung unter Bezugnahme auf die beigefügten Zeichnungen näher beschrieben. Es zeigen:
- Fig. 1: in schematischer Darstellung eine erste aus dem Stand der Technik bekannte Anordnung zur induktiven Energieübertragung;
- Fig. 2: in schematischer Darstellung eine zweite aus dem Stand der Technik bekannte Anordnung zur induktiven Energieübertragung;
- Fig. 3: ein erstes Ausführungsbeispiel einer erfindungsgemäßen Anordnung zur induktiven Energieübertragung;
- Fig. 4: in schematischer Darstellung den Feldverlauf bei einer aus dem Stand der Technik bekannten Anordnung gemäß Fig. 1;
- Fig. 5: in schematischer Darstellung den Feldverlauf bei einer erfindungsgemäßen Anordnung gemäß Fig. 6;
- Fig. 6: ein zweites Ausführungsbeispiel einer erfindungsgemäßen Anordnung zur induktiven Energieübertragung;
- Fig. 7: ein drittes Ausführungsbeispiel einer erfindungsgemäßen Anordnung zur induktiven Energieübertragung;
- Fig. 8: ein viertes Ausführungsbeispiel einer erfindungsgemäßen Anordnung zur induktiven Energieübertragung;
- Fig. 9: ein fünftes Ausführungsbeispiel einer erfindungsgemäßen Anordnung zur induktiven Energieübertragung;

- Fig. 10: ein erstes Ausführungsbeispiel einer erfindungsgemäßen Vorrichtung zur induktiven Energieübertragung;
- Fig. 11: ein zweites Ausführungsbeispiel einer erfindungsgemäßen Vorrichtung zur induktiven Energieübertragung;
- Fig. 12: ein drittes Ausführungsbeispiel einer erfindungsgemäßen Vorrichtung zur induktiven Energieübertragung.

In den unterschiedlichen in den Figuren dargestellten Anordnungen und Vorrichtungen zur induktiven Energieübertragung werden für gleiche und gleich wirkende Bauelemente dieselben Bezugszeichen verwendet. Diese werden der Übersichtlichkeit halber nur einmal eingeführt. Insbesondere werden für die Ausführungsformen der vorliegenden Erfindung die bereits mit Bezug auf die Figuren 1 und 2 eingeführten Bezugszeichen übernommen.

Fig. 3 zeigt ein erstes Ausführungsbeispiel einer erfindungsgemäßen Anordnung zur Energieübertragung. Neben der in einem flexiblen Gewebe 14, beispielsweise einer Textilie, angeordneten zweiten Spule 10 sowie der dazu konzentrisch ausgerichteten ersten Spule 16 ist eine dritte Spule 20 vorgesehen, die ebenfalls konzentrisch zur ersten Spule 16 und zur zweiten Spule 10 ausgerichtet ist. Zur Ausrichtung und Fixierung in dieser Konstellation wird eine nicht dargestellte Fixiervorrichtung verwendet. Wie sich aus der in den Spulen 16 und 20 eingezeichneten Stromrichtung ergibt, sind die Spulen 16 und 20 derart mit einer Stromversorgungsvorrichtung gekoppelt, dass die Spulen 16 und 20 zumindest während der induktiven Energieübertragung gleichsinnig von demselben Strom durchflossen werden. In diesem Fall wirken die Spulen 16, 20 als Sendespulen, die Spule 10 als Empfangsspule. Die Spule 10 ist als Luftwicklung realisiert und damit besonders flexibel. Bei der in Fig. 3 dargestellten Anordnung sind keine ferromagnetischen Schirmvorrichtungen vorgesehen. Bei der Anordnung gemäß Fig. 3 tritt zwischen den beiden umschließenden und vom gleichen Strom durchflossenen Spulen 16, 20 eine Feldbündelung auf, welche zu einer Steigerung des Kopplungsfaktors führt. Aufgrund dieser Feldbündelung ist es grundsätzlich möglich, zwischen den Spulen 10, 16, 20 auf ferromagnetische Materialien zu verzichten. Dies verringert das Gewicht und steigert die mechanische Flexibilität insbesondere der Spule 10.

Bei einer alternativen Ansteuerung wirkt die Spule 10 als Sendespule, die Spulen 16 und 20 als Empfangsspulen.

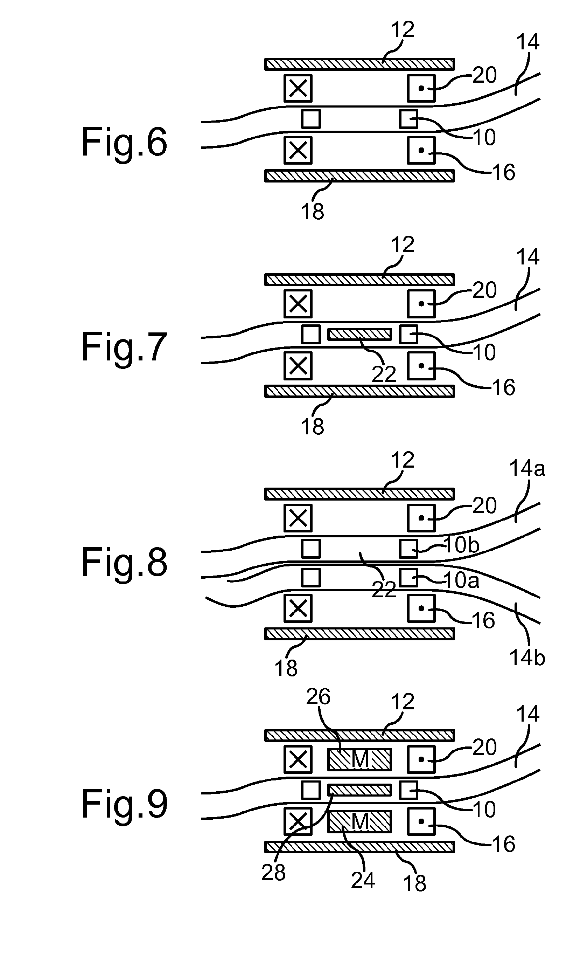

Eine zweite Ausführungsform einer erfindungsgemäßen Anordnung ist in Fig. 6 dargestellt. Dabei ist den Spulen 16, 20 jeweils eine ferromagnetische Schirmvorrichtung 18, 12 auf der von der Spule 10 abgewandten Seite zugeordnet. Diese Schirmvorrichtungen 18, 12 können Ferrit, Metall oder mindestens ein ferromagnetisches Polymer umfassen. Während bei der in Fig. 1 dargestellten, aus dem Stand der Technik bekannten Anordnung die Schirmvorrichtung 12 in dem flexiblen Gewebe 14 angeordnet ist, ist dies bei der in Fig. 6 dargestellten Ausführungsform der vorliegenden Erfindung nicht der Fall.

Die Schirmvorrichtungen 18, 12 dienen einer weiteren Steigerung des Kopplungsfaktors und einer weiteren Verringerung des magnetischen Störfeldes. Aufgrund der Anordnung gemäß Fig. 6 hat diese, im Gegensatz zur Anordnung gemäß Fig. 1, keinen negativen Einfluss auf die mechanische Flexibilität sowie das Gewicht des in dem flexiblen Gewebes untergebrachten Teils der Anordnung, da in dem flexiblen Gewebe 14 lediglich die Spule 10 und zwar ohne Schirmvorrichtung angeordnet ist. Für den Fall, dass die Spule 10 die Empfangsspule ist, sind nämlich die beiden äußeren Spulen 16, 20 einschließlich ihrer Schirmvorrichtungen 18, 12 lediglich während eines Ladevorgangs mit der Empfangsspule 10 auf die dargestellte Art und Weise zu koppeln.

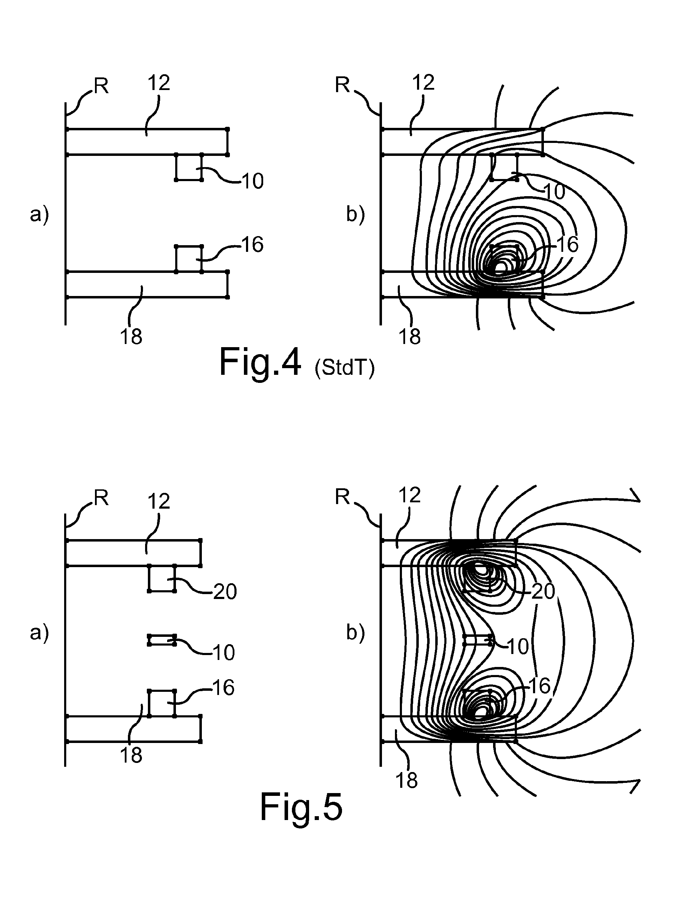

Die Figuren 4 und 5 zeigen in diesem Zusammenhang die zugehörigen Feldverläufe. Die Anordnung gemäß Fig. 4a entspricht der Anordnung gemäß Fig. 1, wobei R die Rotationsachse darstellt. Die Anordnung gemäß Fig. 5a entspricht der Darstellung von Fig. 6, wobei die Spulen 16, 20 als Sendespulen und die Spule 10 als Empfangsspule verwendet werden. Wie der Darstellung von Fig. 5b im Vergleich mit der Darstellung von Fig. 4b entnommen werden kann, kommt es gemäß Fig. 5b infolge der zwei Sendespulen 16, 20 zu einer deutlichen Feldbündelung bei der Spule 10, wobei zu berücksichtigen ist, dass auch die Feldlinien, die in der Darstellung von Fig. 5b links von der Spule 10 verlaufen, aufgrund der rotationssymmetrischen Darstellung die Spule 10 durchdringen. Auch ohne dass der Spule 10 eine Schirmvorrichtung zugeordnet wäre, kann ein gegenüber der Darstellung von Fig. 4b deutlich verbesserter Kopplungsfaktor und damit ein höherer Wirkungsgrad realisiert werden.

Eine weitere Möglichkeit der Kopplungsfaktorsteigerung mit einem je nach Anwendungsfall gegebenenfalls vernachlässigbarem Nachteil, der darin besteht, dass das Gewicht der zweiten Spule 10 minimal ansteigt und die Flexibilität minimal verringert wird, besteht darin, siehe hierzu die in Fig. 7 dargestellte Ausführungsform, einen Ferritkern, insbesondere eine Ferritscheibe 22, in der Mitte der Spule 20 zu integrieren. Durch die ferromagnetische Scheibe 22 lässt sich die Induktivität der zweiten Spule 10 sowie der Kopplungsfaktor und der Wirkungsgrad gegenüber der Anordnung gemäß Fig. 6 weiter steigern.

Wie sich aus der in Fig. 8 dargestellten Ausführungsform ergibt, können mehrere, vorliegend zwei, in einem flexiblen Gewebe 14a, 14b angeordnete Spulen 10a, 10b von denselben äußeren Spulen 16, 20 versorgt werden. Am Beispiel einer Textilie ist es möglich, ein Paar von Kleidungsstücken, beispielsweise Schuhe, Handschuhe, Socken im Zusammenhang mit Heizvorrichtungen, gleichzeitig mit der gleichen Vorrichtung mit Energie zu versorgen.

Selbstverständlich ist auch bei der in Fig. 8 dargestellten Variante eine weitere Steigerung des Kopplungsfaktors durch den Einsatz von Ferritscheiben bei den Spulen 10a, 10b möglich. Andererseits kann je nach Anwendungsfall auf die Schirmvorrichtungen 18, 12 verzichtet werden.

Fig. 9 zeigt ein Ausführungsbeispiel, bei dem zur konzentrischen Ausrichtung der Spulen 10, 16, 20 mit den äußeren Spulen 16, 20 ein Magnet 24, 26 und mit der inneren Spule 10 eine Metallscheibe 28 gekoppelt ist. Dabei können die Magnete 24, 26 als Permanentmagnete oder Elektromagnete realisiert sein. Selbstverständlich ist auch eine umgekehrte Realisierung möglich, das heißt den Spulen 16, 20 sind Metallscheiben zugeordnet, während der inneren Spule 10 ein Magnet zugeordnet ist. Es ist zwar besonders vorteilhaft, die Magneten 24, 26 sowie die Metallscheibe 28 innerhalb der jeweiligen Spule 16, 20, 10 anzuordnen, jedoch ergibt sich der gewünschte Effekt der konzentrischen Ausrichtung auch bei einer Anordnung der Magnete und Metallscheiben außerhalb der jeweiligen Spulen 10, 16, 20. Der in Fig. 9 dargestellte Mechanismus ist selbstverständlich auch bei dem in Fig. 8 dargestellten Ausführungsbeispiel mit mehreren inneren Spulen 10a, 10b einsetzbar.

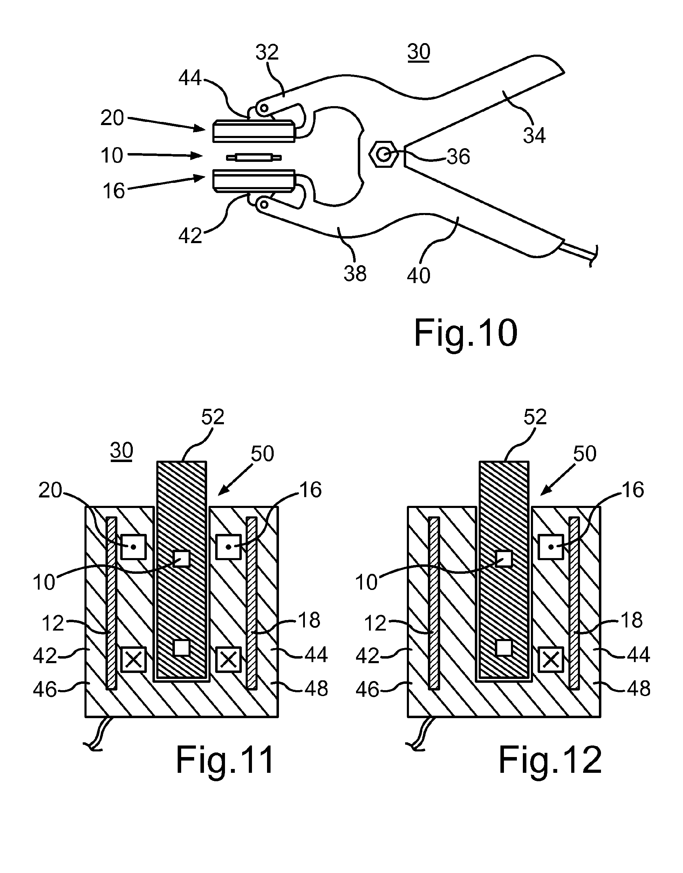

Fig. 10 zeigt ein erstes Ausführungsbeispiel einer Vorrichtung 30 zur induktiven Energieübertragung. Diese ist als Zange ausgebildet mit einem ersten Arbeitsbacken 32 und einem mit diesem fest verbundenen ersten Zangengriff 34. Über eine Schwenkachse 36 ist am ersten Arbeitsbacken 32 ein zweiter Arbeitsbacken 38 gelagert, der mit dem ersten Arbeitsbacken 32 ein Zangenmaul bildet. Ein zweiter Zangengriff 40 ist mit dem zweiten Arbeitsbacken 38 fest verbunden. Ein nicht dargestelltes Federelement ist dazu ausgelegt, den ersten 32 gegen den zweiten Arbeitsbacken 38 federnd vorzuspannen. In einem ersten Element 42 ist die Spule 16 angeordnet, während in einem zweiten Element 44 die Spule 20 angeordnet ist. Durch Loslassen der Zangengriffe 34, 40 werden die Elemente 42, 44 aufeinander zubewegt, so dass eine Spule 10 konzentrisch mit den Spulen 16, 20 ausgerichtet und eingeklemmt wird. Zu diesem Zweck sind die Elemente 42, 44 schwenkbar an den Arbeitsbacken 38, 32 gelagert. Die Spule 10 ist zumindest während eines Ladevorgangs durch Loslassen der Zangengriffe 34, 40 in einer konzentrischen Ausrichtung mit den Spulen 16, 20 fixiert. Bevorzugt sind weiterhin Arretierungsmittel vorgesehen. Eine nicht dargestellte Elektronik sorgt dafür, dass die Spulen 16, 20, wie bereits oben erwähnt, gleichsinnig vom selben Strom durchflossen werden.

Bei der in Fig. 10 dargestellten Ausführungsform einer erfindungsgemäßen Vorrichtung zur induktiven Energieübertragung können alle Arten von Anordnungen, wie sie in den Figuren 3, 6, 7, 8, 9 erläutert wurden, beziehungsweise Kombinationen daraus, eingesetzt werden. Dasselbe gilt für das in Fig. 11 dargestellte zweite Ausführungsbeispiel einer erfindungsgemäßen Vorrichtung 30 zur induktiven Energieübertragung. Diese unterscheidet sich von der in Fig. 10 dargestellten Ausführungsform durch einen anderen Aufbau. So ist das erste 42 und das zweite Element 44 in gegenüberliegenden Schenkeln 46, 48 einer U-förmigen Aufnahme 50 vorgesehen. Diese U-förmige Aufnahme ist insbesondere stationär angeordnet und ausgelegt mit mobilen Vorrichtungen 52, in denen die Spule 10 angeordnet ist, zur induktiven Energieübertragung zusammenzuwirken. Die U-förmige Aufnahme kann dabei als kontaktlose Docking Station realisiert sein.

Fig. 12 zeigt eine Vorrichtung zur induktiven Energieübertragung, die prinzipiell so aufgebaut ist wie die in Fig. 11 dargestellte Ausführungsform. Allerdings ist bei der in Fig. 12 dargestellten Ausführungsform keine Spule 20 vorgesehen. Die in Fig. 12 dargestellte Ausführungsform bietet gegenüber der in Fig. 1 dargestellten, aus dem Stand der Technik bekannten Anordnung ebenfalls den Vorteil, dass zur Durchführung einer induktiven Energieübertragung in dem mobilen Endabschnitt 52 lediglich die Spule 10 vorgesehen werden braucht und keine Schirmvorrichtung. Bei der in Fig. 12 dargestellten Ausführungsform ist die Schirmvorrichtung 12 nämlich im ersten Schenkel 46 und damit in der stationären U-förmigen Aufnahme 50 vorgesehen. Demnach kann auch bei der Ausführungsform gemäß Fig. 12 der mobile Endabschnitt 52 bei einem geringen Gewicht und, sofern gewünscht, flexibel ausgebildet werden, ohne den Kopplungsfaktor oder den Wirkungsgrad gegenüber der in Fig. 1 dargestellten bekannten Anordnung zu reduzieren. Die in Fig. 12 dargestellte Ausführungsform ermöglicht daher auch die induktive Energieübertragung großer Leistungen ohne Anordnung einer Schirmvorrichtung im mobilen Teil 52.

## Patentansprüche

1. Anordnung zur induktiven Energieübertragung mit
- einer ersten Spule;
- einer zweiten Spule; und
- einer dritten Spule,
**dadurch gekennzeichnet,**
**dass** die Anordnung weiterhin eine Fixiervorrichtung (30) umfasst, die ausgelegt ist, die erste (16), die zweite (10) und die dritte Spule (20) zum Zwecke der Energieübertragung in konzentrischer Ausrichtung zueinander zu fixieren.

2. Anordnung nach Anspruch 1,
**dadurch gekennzeichnet,**
**dass** die Anordnung eine Stromversorgungsvorrichtung umfasst, die derart mit der ersten (16) und der dritten Spule (20) gekoppelt ist, dass die erste Spule (16) und die dritte Spule (20) zumindest während der induktiven Energieübertragung gleichsinnig von Strom, insbesondere demselben Strom, durchflossen werden, wobei die zweite Spule (10) räumlich zwischen der ersten (16) und der dritten Spule (20) angeordnet ist.

3. Anordnung nach einem der Ansprüche 1,
**dadurch gekennzeichnet,**
**dass** die Anordnung eine Stromversorgungsvorrichtung umfasst, die mit der zweiten Spule (10) gekoppelt ist, wobei die zweite Spule (10) räumlich zwischen der ersten (16) und der dritten Spule (20) angeordnet ist.

4. Anordnung nach einem der vorhergehenden Ansprüche,
**dadurch gekennzeichnet,**
**dass** die Anordnung weiterhin eine erste (18) und eine zweite ferromagnetische Schirmvorrichtung (12) umfasst, wobei die erste Schirmvorrichtung (18) auf der Seite der ersten Spule (16) angeordnet ist, die von der zweiten Spule (10) abgewandt ist, wobei die zweite Schirmvorrichtung (12) auf der Seite der dritten Spule (20) angeordnet ist, die von der zweiten Spule (10) abgewandt ist.

5. Anordnung nach Anspruch 4,
**dadurch gekennzeichnet,**
**dass** die erste (18) und/oder die zweite Schirmvorrichtung (12) Ferrit, Metall oder mindestens ein ferromagnetisches Polymer umfasst.

6. Anordnung nach einem der vorhergehenden Ansprüche,
**dadurch gekennzeichnet,**
**dass** die zweite Spule (10) als Luftwicklung realisiert ist.

7. Anordnung nach einem der Ansprüche 1 bis 5,
**dadurch gekennzeichnet,**
**dass** die zweite Spule (10) einen ferromagnetischen Kern (22), insbesondere eine ferromagnetische Scheibe, umfasst.

8. Anordnung nach einem der vorhergehenden Ansprüche,
**dadurch gekennzeichnet,**
**dass** die zweite Spule (10) mindestens eine erste zweite (10a) und eine zweite zweite Spule (10b) umfasst, die zueinander konzentrisch ausgerichtet sind.

9. Anordnung nach einem der vorhergehenden Ansprüche,
**dadurch gekennzeichnet,**
**dass** mit der ersten Spule (16) ein erster Magnet (24) und/oder mit der dritten Spule (20) ein zweiter Magnet (26) gekoppelt ist, wobei weiterhin bevorzugt mit der zweiten Spule (10) ein magnetisches Element (28) gekoppelt ist, das geeignet ist, mit dem ersten (24) und/oder dem zweiten Magneten (26) zur Ausrichtung der zweiten Spule (10) gegenüber der ersten (16) und/oder dritten Spule (20) zusammenzuwirken.

10. Anordnung nach Anspruch 9,
**dadurch gekennzeichnet,**
**dass** der erste (24) und/oder der zweite Magnet (26) einen Permanentmagneten oder einen Elektromagneten umfasst.

11. Vorrichtung zur induktiven Energieübertragung mit
- einer ersten Spule (16); und
- einer zweiten Spule (20),
**dadurch gekennzeichnet,**
**dass** die Vorrichtung ein erstes Element (42) umfasst, in dem die erste Spule (16) angeordnet ist, sowie ein zweites Element (44), in dem die zweite Spule (20) angeordnet ist,
wobei das erste (42) und das zweite Element (44) zumindest während der induktiven Energieübertragung derart angeordnet sind, dass die erste (16) und die zweite Spule (20) konzentrisch ausgerichtet sind, wobei zwischen dem ersten (42) und dem zweiten Element (44) ein Raum für eine dritte Spule (10) verbleibt, um Energie von der ersten (16) und der zweiten Spule (20) auf die dritte Spule (10) zu übertragen,
wobei der Raum für die dritte Spule (10) derart ausgelegt ist, dass die dritte Spule (10) nach dem Einbringen in diesen Raum in einer Lage fixiert ist, bei der die dritte Spule (10) konzentrisch mit der ersten (16) und der zweiten Spule (20) ausgerichtet ist,
wobei die erste (16) und die zweite Spule (20) derart elektrisch miteinander gekoppelt sind, dass sie zumindest während der Energieübertragung gleichsinnig von Strom, insbesondere demselben Strom, durchflossen werden.

12. Vorrichtung zur induktiven Energieübertragung mit
- einer ersten Spule (16);
- einer ersten Schirmvorrichtung (18), die der ersten Spule (16) zugeordnet ist; und
- einer zweiten Schirmvorrichtung (12);
**dadurch gekennzeichnet,**
**dass** die Vorrichtung ein erstes Element (42) umfasst, in dem die erste Spule (16) und die erste Schirmvorrichtung (18) angeordnet ist, sowie ein zweites Element (44), in dem die zweite Schirmvorrichtung (12) angeordnet ist, wobei das erste (42) und das zweite Element (44) zumindest während der induktiven Energieübertragung derart angeordnet sind, dass die erste (18) und die zweite Schirmvorrichtung (12) derart gegenüberliegend ausgerichtet sind, dass zwischen dem ersten (42) und dem zweiten Element (44) Raum für eine zweite Spule (10) verbleibt, um Energie von der ersten (16) auf die zweite Spule (10) zu übertragen,
wobei der Raum für die zweite Spule (10) derart ausgelegt ist, dass die zweite Spule (10) nach dem Einbringen in diesen Raum in einer Lage fixiert ist, bei der die zweite Spule (10) konzentrisch mit der ersten Spule (16) ausgerichtet ist, wobei die erste Schirmvorrichtung (18) auf der Seite der ersten Spule (16) angeordnet ist, die von dem für die zweite Spule (10) vorgesehenen Raum abgewandt ist.

13. Vorrichtung nach einem der Ansprüche 11 oder 12,
**dadurch gekennzeichnet,**
**dass** die Vorrichtung als Zange ausgebildet ist mit einem ersten Arbeitsbacken (32) und einem mit diesem fest verbundenen ersten Zangengriff (34) sowie einem mittels einer Schwenkachse (36) schwenkbar am ersten Arbeitsbacken (32) gelagerten zweiten Arbeitsbacken (38), der mit dem ersten Arbeitsbacken (32) ein Zangenmaul bildet, einem zweiten Zangengriff (40), der mit dem zweiten Arbeitsbacken (38) fest verbunden ist, sowie einem Federelement, dass ausgelegt ist, den ersten (32) gegen den zweiten Arbeitsbacken (38) federnd vorzuspannen,
wobei das erste Element (42) am ersten Arbeitsbacken (32) und das zweite Element (44) am zweiten Arbeitsbacken (38) angeordnet ist, sowie einem Anschluss zum Anschließen der Vorrichtung an eine Spannungsversorgung, wobei der Anschluss zumindest mit der ersten Spule (16) gekoppelt ist.

14. Vorrichtung nach einem der Ansprüche 11 oder 12,
**dadurch gekennzeichnet,**
**dass** die Vorrichtung eine stationäre U-förmige Aufnahme (50) umfasst, wobei in einem ersten Schenkel (46) das erste Element (42) und in einem zweiten Schenkel (48), der dem ersten Schenkel (46) gegenüberliegt, das zweite Element (44) angeordnet ist, sowie einen Anschluss zum Anschließen der Vorrichtung an eine Spannungsversorgung, wobei der Anschluss zumindest mit der ersten Spule (16) gekoppelt ist.

15. Verfahren zur induktiven Energieübertragung mittels einer Anordnung mit einer ersten Spule (16), einer zweiten Spule (10) und einer dritten Spule (20), **gekennzeichnet durch** folgende Schritte:
a) Konzentrisches Ausrichten der ersten (16), der zweiten (10) und der dritten Spule (20);
b) Fixieren der ersten (16), der zweiten (10) und der dritten Spule (20) in der konzentrischen Ausrichtung; und
c) Bestromen zumindest einer der Spulen (16, 10, 20).
